# EUROPÄISCHE PATENTSCHRIFT

(11) **EP 2 234 849 B1**
(45) Veröffentlichungstag und Bekanntmachung des Hinweises auf die Patenterteilung: **20.03.2013**
(21) Anmeldenummer: 08862805.2
(22) Anmeldetag: 22.10.2008
(51) Int. Cl.: B60S 1/04, B60S 1/58

(54) **SCHEIBENWISCHERANTRIEB FÜR EIN KRAFTFAHRZEUG**
WINDSHIELD WIPER DRIVE FOR A MOTOR VEHICLE
ENTRAÎNEMENT D'ESSUIE-GLACE POUR UN VÉHICULE AUTOMOBILE

(30) Priorität: 19.12.2007 DE 102007061378
(43) Veröffentlichungstag der Anmeldung: 06.10.2010
(73) Patentinhaber: Robert Bosch GmbH, 70442 Stuttgart (DE)
(72) Erfinder: HUESGES, Mario, 77830 Buehlertal (DE); GEUBEL, Paul, 76534 Baden-Baden (DE)
(86) Internationale Anmeldenummer: PCT/EP2008/064259
(87) Internationale Veröffentlichungsnummer: WO 2009/077242

(56) Entgegenhaltungen:
- EP-A- 0 306 361
- DE-A1- 3 406 688
- DE-A1- 10 242 298
- FR-A- 2 796 915
- JP-A- 60 042 121
- US-A1- 2004 178 659

## Beschreibung

### Stand der Technik

Die Erfindung betrifft einen Scheibenwischerantrieb für ein Kraftfahrzeug gemäß dem Oberbegriff des Anspruchs 1.

Heckscheibenwischerantriebe werden bisher an drei in Umfangsrichtung beabstandeten Befestigungspunkten mit der Fahrzeugkarosserie eines Kraftfahrzeugs verschraubt oder vernietet. Dabei variieren die Befestigungspunkte von Fahrzeugtyp zu Fahrzeugtyp. Nach Festlegen der Heckscheibenwischeranlage an der Fahrzeugkarosserie wird eine vom Scheibenwischerantrieb separate Abdeckung an der Fahrzeugkarosserie festgelegt, um den Scheibenwischerantrieb zum Fahrzeuginnenraum hin abzudecken. Nachteilig bei dem bekannten Scheibenwischerantrieb sind das aufwändige Montageverfahren sowie die große Anzahl an benötigten Befestigungsschrauben zum separaten Festlegen des Scheibenwischerantriebs und der Abdeckung an der Fahrzeugkarosserie.

EP 0 306 361 A zeigt einen Scheibenwischerantrieb mit einer Montageplatte, die teilweise integriert mit Gehäusen eines Getriebemotors und einer Waschwasserpumpte ausgeführt sein kann.

### Offenbarung der Erfindung

### Technische Aufgabe

Der Erfindung liegt die Aufgabe zugrunde, einen Scheibenwischerantrieb vorzuschlagen, der einfach und mit möglichst wenigen Befestigungsmitteln am Kraftfahrzeug montierbar ist.

### Technische Lösung

Diese Aufgabe wird mit einem Scheibenwischerantrieb mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die Abdeckung, mit der der Scheibenwischerantrieb zum Fahrzeuginnenraum hin abdeckbar ist, einteilig mit zumindest einem Bauteil des Scheibenwischerantriebs auszubilden. Anders ausgedrückt bildet der Scheibenwischerantrieb mit der Abdeckung eine Funktionseinheit, die gemeinsam am Fahrzeug, insbesondere an der Fahrzeugkarosserie, montierbar ist. Ein nach dem Konzept der Erfindung ausgebildeter Scheibenwischerantrieb mit integraler Abdeckung ist besonders einfach zu montieren, da ein vollständiger Befestigungsschritt zum separaten Festlegen des Scheibenwischerantriebs entfallen kann. Darüber hinaus kann die Anzahl der Befestigungspunkte und damit die Anzahl der Befestigungsmittel reduziert werden, da, anstelle von zwei separaten Elementen (Scheibenwischerantrieb und Abdeckung), jetzt nur noch ein einziges Element am Fahrzeug montiert werden muss.

Erfindungsgemäß ist vorgesehen, dass die Abdeckung derart ausgeformt ist, dass sie, zusammen mit der Fahrzeugkarosserie, einen vollumfänglich geschlossenen Aufnahmeraum für den Scheibenwischerantrieb bildet. Bevorzugt ist die Abdeckung hierzu wannenförmig ausgeformt und überragt den Scheibenwischerantrieb quer zur Längserstreckung der Wischerwelle in zumindest eine Richtung. Bevorzugt überragt die Abdeckung den Scheibenwischerantrieb seitlich in alle Richtungen, so dass dieser nach der Montage an der Fahrzeugkarosserie vollständig zum Fahrzeuginnenraum hin abgedeckt ist. Zur Minimierung der Geräuschemission ist eine Ausführungsform von Vorteil, bei der die Abdeckung aus einem schallabsorbierenden Material ausgebildet ist und/oder bei der die Abdeckung, vorzugsweise auf der dem Scheibenwischerantrieb zugewandten Seite, mit einem Schalldämmmaterial ausgestattet ist.

Weiter ist das Bauteil des Scheibenwischerantriebs, mit dem die Abdeckung einteilig ausgebildet ist, ein Gehäuseteil des einteilig oder mehrteilig ausgebildeten Wischerantriebs. Üblicherweise besteht das Gehäuse des Scheibenwischerantriebs aus einem, insbesondere zweiteiligen, Getriebegehäuse zur Aufnahme eines, insbesondere als Schneckengetriebe ausgebildeten, Getriebes und einem an dem Getriebegehäuse angeflanschten, beispielsweise als Tiefziehteil aus Metall ausgebildeten Motorgehäuse zur Aufnahme eines elektrischen Antriebsmotors.

Von besonderem Vorteil ist eine Ausführungsform des Scheibenwischerantriebs, bei der dieser als Heckscheibenwischerantrieb ausgebildet ist, bei dem also die Wischerwelle unmittelbar aus dem Gehäuse des Scheibenwischerantriebs herausragt und im montierten Zustand eine Öffnung in einer Heckscheibe oder Heckklappe des Kraftfahrzeugs durchsetzt. Aufgrund der kompakten Bauform eines Heckscheibenwischerantriebs ist dieser auch nach einstückiger Ausbildung mit einer Abdeckung zu Montagezwecken gut handhabbar.

Fertigungstechnisch vorteilhaft ist eine Ausführungsform des Scheibenwischerantriebs, bei der sowohl die Abdeckung als auch das einstückig mit dieser ausgebildete Gehäuseteil aus Kunststoff ausgebildet sind.

Zur Realisierung einer einfachen Fertigbarkeit ist es besonders bevorzugt, die Abdeckung und das Gehäuseteil als gemeinsames Kunststoffspritzgussteil auszubilden.

In Weiterbildung der Erfindung ist mit Vorteil vorgesehen, dass das Gehäuseteil, welches einstückig mit der Abdeckung ausgebildet ist, ein Antriebsmotorgehäuseteil und/oder ein Getriebegehäuseteil ist. Bevorzugt handelt es sich bei dem einteilig mit der Abdeckung ausgebildeten Gehäuseteil um eine, insbesondere aus Kunststoff ausgebildete, Gehäuseschale oder um einen Gehäusedeckel, vorzugsweise um die auf der von einer Wischerwelle abgewandten Seite des Scheibenwischerantriebs angeordnete Gehäuseschale.

Um ein möglichst schnelles und einfaches Festlegen der Abdeckung, vorzugsweise zusammen mit dem Scheibenwischerantrieb, am Fahrzeug, insbesondere an der Fahrzeugkarosserie, zu ermöglichen, ist eine Ausführungsform bevorzugt, bei der die Abdeckung Befestigungsmittel zum Festlegen am Kraftfahrzeug aufweist. Diese können auf vielfältige Weise aus gestaltet sein. Besonders bevorzugt ist eine Ausführungsform, bei der die Befestigungsmittel mindestens ein Schraubenaufnahmeloch zum Durchführen einer Befestigungsschraube und/oder zum Durchführen eines Befestigungsniets aufweisen.

Zusätzlich oder alternativ können die Befestigungsmittel Rastmittel, insbesondere mindestens einen Rasthaken, aufweisen, der bevorzugt einteilig mit der Abdeckung ausgebildet ist, und beispielsweise bereits im Spritzgussverfahren angeformt wird. Zusätzlich oder alternativ zu einem Rasthaken können die Rastmittel selbstverständlich auch eine Rastaufnahme zum Zusammenwirken mit einem an der Fahrzeugkarosserie angeordneten Rasthaken bzw. einer Rastnase aufweisen.

Im Hinblick auf eine Optimierung, d.h. Minimierung, der Montagezeit, ist eine Ausführungsform des Scheibenwischerantriebs bevorzugt, bei der das Gehäuse des Scheibenwischerantriebs befestigungsmittelfrei ausgebildet ist, also keine Befestigungsmittel zum Festlegen am Fahrzeug aufweist. Durch die integrale Ausbildung der Abdeckung mit einem Bauteil des Scheibenwischerantriebs, bevorzugt mit einem Gehäuseteil des Scheibenwischerantriebs, erfolgt die Festlegung des Scheibenwischerantriebs bzw. des Gehäuses des Scheibenwischerantriebs bevorzugt nur unmittelbar über die Abdeckung.

### Kurze Beschreibung der Zeichnung

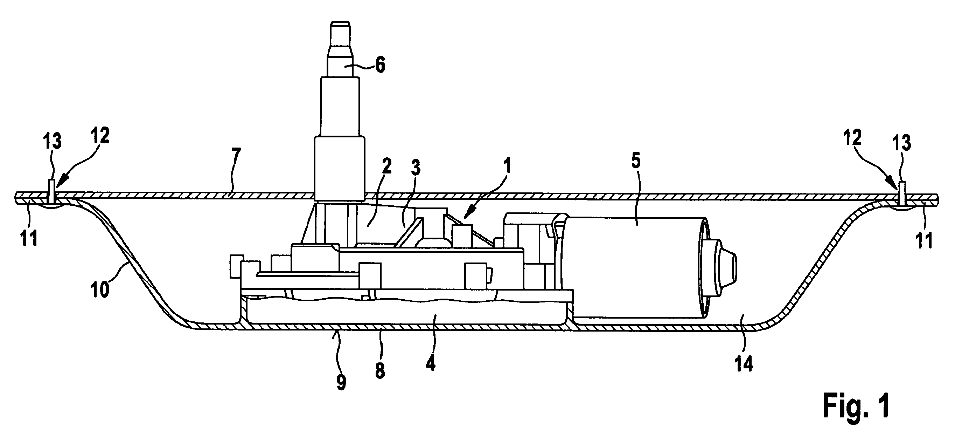

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen
Fig. 1: eine schematische, teilgeschnittene Darstellung eines an einer Fahrzeugkarosserie montierten Scheibenwischerantriebs mit integraler Abdeckung.

### Ausführungsform der Erfindung

In Fig. 1 ist ein als Heckscheibenwischerantrieb ausgebildeter Scheibenwischerantrieb 1 für ein Kraftfahrzeug gezeigt. Der Scheibenwischerantrieb 1 umfasst ein mehrteilig aufgebautes Gehäuse 2 mit zwei ein Getriebegehäuse bildenden Gehäuseteilen 3, 4 (Gehäuseschalen) und einem am Getriebegehäuse angeflanschten, ein Antriebsmotorgehäuse bildendes Gehäuseteil 5.

Aus dem Gehäuseteil 3 ragt eine Wischerwelle 6 heraus, an der ein nicht gezeigter Wischerarm in an sich bekannter Weise festlegbar ist. Die Wischerwelle 6 durchsetzt dabei die Fahrzeugkarosserie 7 eines ansonsten nicht weiter dargestellten Fahrzeugs.

Einteilig mit dem als Gehäuseschale des Gehäuses 2 ausgebildeten Gehäuseteil 4 ist eine wannenförmige Abdeckung 8 ausgebildet. Die Abdeckung 8 ist mit dem Gehäuseteil 4 als einteiliges Spritzgussteil aus Kunststoff ausgeführt.

Die Abdeckung 8 umfasst einen Bodenabschnitt 9, welcher abschnittsweise gleichzeitig das Gehäuse 2 bildet. Der Bodenabschnitt 9 überragt das Gehäuse 2 seitlich in sämtliche (Seiten-) Richtungen und geht außen in einen umlaufenden Umfangswandabschnitt 10 über, der sich vollumfänglich um das gesamte Gehäuse 2 erstreckt. In diesem Ausführungsbeispiel ist der Umfangswandabschnitt 10 abgeschrägt ausgebildet.

In dem von dem Bodenabschnitt 9 abgewandten äußeren Umfangsbereich geht der Umfangswandabschnitt 10 in einen umlaufenden Befestigungsrand 11 über, der mit Befestigungsmitteln 12 versehen ist. Die Befestigungsmittel 12 sind in dem gezeigten Ausführungsbeispiel als Durchgangsöffnungen zur jeweiligen Aufnahme eines Befestigungsniets 13 ausgebildet, wobei die Abdeckung 8 mitsamt dem Scheibenwischerantrieb 1 über die Befestigungsniete 13 an der Fahrzeugkarosserie 7 festgelegt ist. Zusätzliche Befestigungsmittel zum separaten Festlegen des Gehäuses 2 sind nicht vorgesehen, obwohl auch eine Ausführungsform mit derartigen Befestigungsmitteln realisierbar ist.

Wie sich aus Fig. 1 ergibt, bildet die Abdeckung 8 zusammen mit der Fahrzeugkarosserie 7 einen vollumfänglich geschlossenen Aufnahmeraum 14, in dem sich der Scheibenwischerantrieb 1 befindet. Öffnungen weist der Aufnahmeraum 14 lediglich für die Wischerwelle 6 sowie für eine nicht gezeigte elektrische Anbindung des Scheibenwischerantriebs 1 auf. Die den Aufnahmeraum 14 begrenzende Abdeckung 8 schirmt den Scheibenwischerantrieb 1 gegenüber dem Fahrzeuginnenraum ab.

## Patentansprüche

1. Scheibenwischerantrieb für ein Kraftfahrzeug zum Antreiben einer Wischerwelle (6), bestehend aus mehreren Bauteilen, wobei eine am Fahrzeug, insbesondere an der Fahrzeugkarosserie (7), festlegbare Abdeckung (8) zum Abdecken des Scheibenwischerantriebs (1) einteilig mit zumindest einem Gehäuseteil (3, 4, 5) des Scheibenwischerantriebs (1 ausgebildet ist, **dadurch gekennzeichnet, dass** die Abdeckung (8) derart ausgeformt ist, dass sie zusammen mit der Fahrzeugkarosserie (7) einen vollumfänglich geschlossenen Aufnahmeraum (14) für den Scheibenwischerantrieb (1) bildet.

2. Scheibenwischerantrieb nach Anspruch 1, **dadurch gekennzeichnet, dass** der Scheibenwischerantrieb (1) als Heckscheibenwischerantrieb ausgebildet ist.

3. Scheibenwischerantrieb nach Anspruch 1 oder 2, **dadurch gekennzeichnet, dass** die Abdeckung (8) und das Gehäuseteil (3, 4, 5) aus Kunststoff ausgebildet sind.

4. Scheibenwischerantrieb nach Anspruch 3, **dadurch gekennzeichnet, dass** die Abdeckung (8) und das Gehäuseteil (3, 4, 5) als gemeinsames Kunststoffspritzgussteil ausgebildet sind.

5. Scheibenwischerantrieb nach einem der Ansprüche 2 bis 4, **dadurch gekennzeichnet, dass** das einteilig mit der Abdeckung (8) ausgebildete Gehäuseteil (3, 4, 5) ein Antriebsmotorgehäuseteil und/oder ein Getriebegehäuseteil ist.

6. Scheibenwischerantrieb nach einem der vorhergehenden Ansprüchen, **dadurch gekennzeichnet, dass** die Abdeckung (8) Befestigungsmittel (12) zum Festlegen am Kraftfahrzeug aufweist.

7. Scheibenwischerantrieb nach Anspruch 6, **dadurch gekennzeichnet, dass** die Befestigungsmittel (12) mindestens ein Schraubenaufnahmeloch und/oder Rastmittel, insbesondere mindestens einen Rasthaken, aufweisen.

8. Scheibenwischerantrieb nach einem der vorhergehenden Ansprüche, **dadurch gekennzeichnet, dass** das Gehäuse (2) des Scheibenwischerantriebs (1) befestigungsmittelfrei ausgebildet ist.

## Claims

1. Windscreen wiper drive for a motor vehicle for driving a wiper shaft (6), consisting of a plurality of components, wherein a covering (8) which is fixable on the vehicle, in particular on the vehicle bodywork (7), and is intended for covering the windscreen wiper drive (1) is formed integrally with at least one housing part (3, 4, 5) of the windscreen wiper drive (1), **characterized in that** the covering (8) is formed in such a manner that, together with the vehicle bodywork (7), said covering forms a receiving space (14), which is closed around the entire circumference, for the windscreen wiper drive (1).

2. Windscreen wiper drive according to Claim 1, **characterized in that** the windscreen wiper drive (1) is designed as a rear windscreen wiper drive.

3. Windscreen wiper drive according to Claim 1 or 2, **characterized in that** the covering (8) and the housing part (3, 4, 5) are formed from plastic.

4. Windscreen wiper drive according to Claim 3, **characterized in that** the covering (8) and the housing part (3, 4, 5) are formed as a common injection-moulded plastics part.

5. Windscreen wiper drive according to one of Claims 2 to 4, **characterized in that** the housing part (3, 4, 5) formed integrally with the covering (8) is a driving motor housing part and/or a gearing housing part.

6. Windscreen wiper drive according to one of the preceding claims, **characterized in that** the covering (8) has fastening means (12) for fixing the latter on the motor vehicle.

7. Windscreen wiper drive according to Claim 6, **characterized in that** the fastening means (12) have at least one screw-receiving hole and/or latching means, in particular at least one latching hook.

8. Windscreen wiper drive according to one of the preceding claims, **characterized in that** the housing (2) of the windscreen wiper drive (1) is formed free from fastening means.

## Revendications

1. Entraînement d'essuie-glace pour un véhicule automobile, pour l'entraînement d'un arbre d'essuie-glace (6), constitué de plusieurs composants, un recouvrement (8) pouvant être fixé sur le véhicule, notamment sur la carrosserie du véhicule (7), étant réalisé pour recouvrir l'entraînement d'essuie-glace (1) d'une seule pièce avec au moins une partie de boîtier (3, 4, 5) de l'entraînement d'essuie-glace (1), **caractérisé en ce que** le recouvrement (8) est formé de telle sorte qu'il forme conjointement avec la carrosserie du véhicule (7) un espace de réception (14) fermé sur toute sa périphérie pour l'entraînement d'essuie-glace (1).

2. Entraînement d'essuie-glace selon la revendication 1, **caractérisé en ce que** l'entraînement d'essuie-glace (1) est réalisé sous forme d'entraînement d'essuie-glace arrière.

3. Entraînement d'essuie-glace selon la revendication 1 ou 2, **caractérisé en ce que** le recouvrement (8) et la partie de boîtier (3, 4, 5) sont réalisés en plastique.

4. Entraînement d'essuie-glace selon la revendication 3, **caractérisé en ce que** le recouvrement (8) et la partie de boîtier (3, 4, 5) sont réalisés sous forme de pièce moulée par injection de plastique commune.

5. Entraînement d'essuie-glace selon l'une quelconque des revendications 2 à 4, **caractérisé en ce que** la partie de boîtier (3, 4, 5) réalisée d'une seule pièce avec le recouvrement (8) est une partie de boîtier d'un moteur d'entraînement et/ou une partie de boîtier d'une transmission.

6. Entraînement d'essuie-glace selon l'une quelconque des revendications précédentes, **caractérisé en ce que** le recouvrement (8) présente des moyens de fixation (12) pour la fixation sur le véhicule automobile.

7. Entraînement d'essuie-glace selon la revendication 6, **caractérisé en ce que** les moyens de fixation (12) présentent au moins un trou de réception de vis et/ou des moyens d'encliquetage, en particulier au moins un crochet d'encliquetage.

8. Entraînement d'essuie-glace selon l'une quelconque des revendications précédentes, **caractérisé en ce que** le boîtier (2) de l'entraînement d'essuie-glace (1) est réalisé sans moyen de fixation.
